# EUROPEAN PATENT SPECIFICATION

(11) **EP 3 971 124 B1**
(45) Date of publication and mention of the grant of the patent: **22.05.2024**
(21) Application number: 21197556.0
(22) Date of filing: 17.09.2021
(51) Int. Cl.: B66B 13/30

(54) **ELEVATOR CAR, ELEVATOR CAR DOOR AND ELEVATOR SYSTEM**
AUFZUGSKABINE, AUFZUGSKABINENTÜR UND AUFZUGSSYSTEM
CABINE D'ASCENSEUR, PORTE DE CABINE D'ASCENSEUR ET SYSTÈME D'ASCENSEUR

(30) Priority: 18.09.2020 CN 202010985276
(43) Date of publication of application: 23.03.2022
(73) Proprietor: Otis Elevator Company, Farmington, Connecticut 06032 (US)
(72) Inventor: FU, Biao, SHANGHAI, 200335 (CN); ZHAO, Yingfang, SHANGHAI, 200335 (CN); WANG, Jin, SHANGHAI, 200335 (CN)
(74) Representative: Dehns

(56) References cited:
- JP-U- S52 106 970
- US-A- 3 566 541

## Description

### FIELD OF THE INVENTION

The present disclosure relates to the technical field of elevators, and in particular to an elevator car, an elevator car door and an elevator system.

### BACKGROUND OF THE INVENTION

In modern society, various types of elevator equipment have been widely used. For such elevator equipment, people generally pay special attention to aspects such as work performance, manufacturing cost, use function, and safety performance. As far as the safety performance of elevators is concerned, high requirements in terms of fire prevention and heat insulation are usually put forward. In the industry, measures such as making corresponding structural improvements to elevator cars, optimizing selection of fire prevention and heat insulation materials, and installing temperature sensors and smoke sensors are generally taken to improve the safety performance in fire prevention of elevators. It is expected to provide a safe and reliable elevator-taking environment for elevator passengers in abnormal situations such as external fires and hazardous smoke.

Nevertheless, it has been discovered by the inventors of the present disclosure that there are still some shortcomings in the prior art in terms of elevator fire prevention, heat insulation, smoke insulation, etc. For example, some of the problems have been ignored for a long time because they are not recognized by people, and therefore have not yet been solved or improved. By way of example, when a car door of the elevator car is closed, a movement gap of generally 4-8mm is required at many positions such as between the car door and a jamb. Although such gaps may sometimes be ignored due to being very small, they will provide a transfer path for flame, heat, smoke, noise and the like in case of external fires or massive smokes, which may cause a rapid rise of the temperature of an inner panel of the elevator car door, smoke intrusion and dispersion, and loud noises. As such, not only the comfortable elevator-taking environment will be affected, but also unexpected or even serious safety accidents will be caused. JPS52106970U discloses an elevator doorway device including intumescent material that expands in response to heat.

It should be noted that the content described above serves for the purpose of facilitating the understanding of the present application. Unless otherwise specified, it should not be assumed that it is taken as the prior art only because it is included in this section.

### SUMMARY OF THE INVENTION

In view of the foregoing, the present disclosure provides an elevator car, an elevator car door, and an elevator system, so as to resolve or at least alleviate one or more of the problems described above as well as problems of other aspects existing in the prior art.

According to a first aspect of the present invention, there is provided an elevator car as claimed in claim 1.

In some embodiments the first fire-proof seal is arranged in a removable manner in at least a part of the first gap, and the second fire-proof seal is arranged in a removable manner in at least a part of the second gap.

In some embodiments the preset value is set in a range of 150°C-230°C.

In some embodiments a volume of the fire-proof seal is increased by 10-20 times after intumescing.

In some embodiments the fire-proof seal is made of a fire-proof sealing material and configured into a sheet shape, and the fire-proof sealing material including an intumescent type graphite material.

According to a second aspect of the present invention, there is provided an elevator car door as claimed in claim 6.

In some embodiments the fire-proof seal is arranged in a removable manner in at least a part of the first gap.

In some embodiments the preset value is set in a range of 150°C-230°C.

In some embodiments a volume of the fire-proof seal is increased by 10-20 times after intumescing.

In some embodiments the fire-proof seal is made of a fire-proof sealing material and configured into a sheet shape, the fire-proof sealing material including an intumescent type graphite material.

According to a third aspect of the present invention, there is provided an elevator system, as claimed in claim 11.

From the following detailed description combined with the accompanying drawings, the principles, features, characteristics and advantages of various technical solutions according to the present disclosure will be clearly understood. The solutions of the present disclosure are not only simple in structure and easy to implement, but also have a low cost and good fire prevention and heat insulation effect. The present disclosure can effectively block the transfer path of flame, heat, smoke, and noise to the interior of the elevator car by filling the gap after the fire-proof seal is heated and expanded in abnormal situations such as external fires, so that a safer, more reliable and comfortable elevator-taking environment can be provided to elevator passengers.

### BRIEF DESCRIPTION OF THE DRAWINGS

The technical solutions of the present disclosure will be described in further detail below with reference to the accompanying drawings and embodiments. However, it should be understood that these drawings are designed merely for the purpose of explanation and only intended to conceptually illustrate the structural configurations described herein, and are not required to be drawn to scale.
FIG. 1 is a schematic partial sectional view showing the structure of an embodiment of an elevator car according to the present disclosure.
FIG. 2 is a schematic cross-sectional structural view taken along a direction A-A in FIG. 1 in a case where no fire-proof seal is provided.
FIG. 3 is a schematic cross-sectional structural view taken along the direction A-A in FIG. 1 in a case where a fire-proof seal has been provided, wherein a partially enlarged view of part B in the figure is also shown.

### DETAILED DESCRIPTION OF THE EMBODIMENT(S) OF THE INVENTION

Firstly, it should be noted that the components, configurations, characteristics, advantages and the like of the elevator car, the elevator car door and the elevator system according to the present disclosure will be specifically described below by way of example. However, it should be understood that all the descriptions are merely given for illustration, and should not be understood as limiting the present disclosure in any way. Herein, the technical terms "first" and "second" are merely used for distinguishing purpose, and are not intended to indicate their order and relative importance. The technical term "connect (or connected, etc.)" covers a situation where a specific component is directly connected to another component and/or indirectly connected to another component. The technical terms "upper", "lower", "top", "bottom", "front", "rear", "inner", "outer" and their derivatives should be associated with the orientations in the drawings. The present disclosure may take various alternative orientations, unless otherwise clearly indicated.

In addition, for any single technical feature described or implied in the embodiments mentioned herein, or any single technical feature illustrated or implied in individual drawings, the present disclosure still allows for any combination or deletion of these technical features (or equivalents thereof), so that more other embodiments of the present disclosure that may not have been mentioned directly herein can be obtained. In addition, for the sake of brevity, general items already known to those skilled in the art will not be repeated herein, such as door openers, landing doors, safety gears, guide devices and the like in the elevator system.

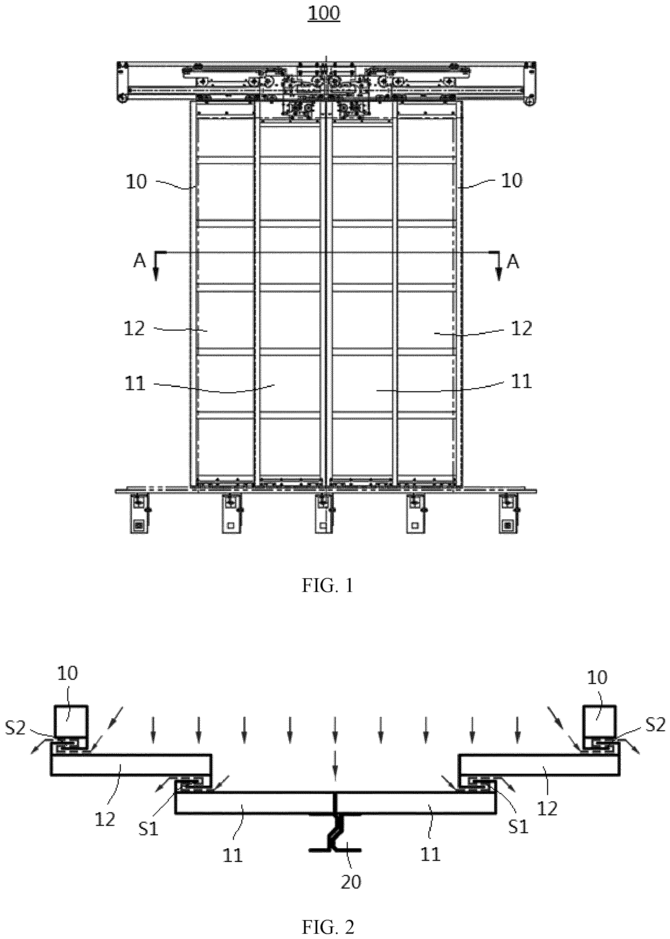

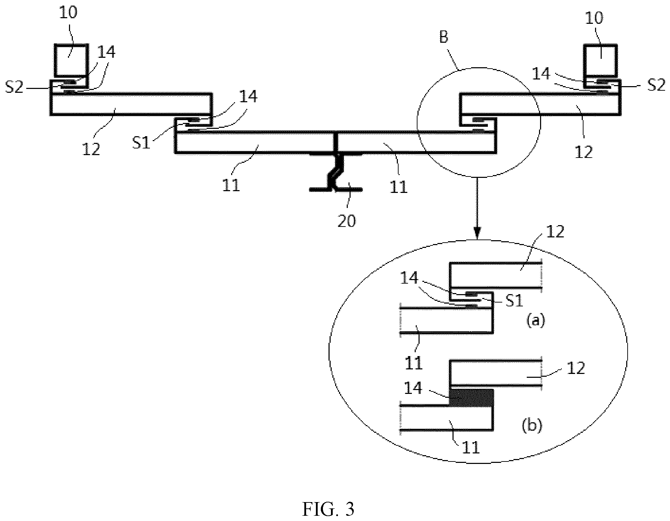

FIGS. 1 and 3 schematically show the general configuration of an embodiment of an elevator car according to the present disclosure. In the following, this embodiment will be used as an example to describe the technical solutions of the present disclosure in detail.

With reference to FIGS. 1 and 3, in this embodiment, an elevator car 100 includes a jamb 10, a fast door 11, and a slow door 12. The slow door 12 is connected and arranged between the jamb 10 and the fast door 11. Together, the slow door 12 and the fast door 11 constitute an elevator car door, and the slow door 12 has a slower moving speed than the fast door 11. Movements of the fast door 11 and the slow door 12 can be controlled by a control part in the elevator system, so that an access passage of the elevator car 100 is closed or opened.

As shown in FIG. 2, even when a landing door (or referred to as a lobby door) 20 is in a closed state, and the fast door 11 and the slow door 12 of the elevator car 100 are in the closed state at the same time, a certain gap actually for example exists between the fast door 11 and the slow door 12, between the slow door 12 and the jamb 10, as well as between the left and right parts of the landing door 20, etc. Therefore, the interior of the elevator car 100 will keep in communication with the external environment in the directions shown by the arrows in FIG. 2. That is, due to the existence of the above gaps, a transfer path for flame, smoke, noise and the like to enter the interior of the elevator car is allowed to be formed. However, since such gaps are usually small and do not have adverse effects during daily use of the elevator, they are not easy to be observed or noticed, and therefore have been generally ignored for a long time in the industry, let alone active and effective countermeasures taken accordingly.

On the contrary, based on the recognition and discovery of the above problems, the present application proposes that a fire-proof seal 14 can be provided in the elevator car 100. By arranging the fire-proof seal 14 in at least a part of the above gaps, for example, at any suitable position of one or more of the fast door 11, the slow door 12 and the jamb 10, the fire-proof seal 14 can intumesce and deform when the ambient temperature exceeds a preset value, so that the fire-proof seal 14 after intumescing and deforming can be used to completely or partially fill the above gaps, as shown in (b) portion of the partially enlarged view of part B in FIG. 3. Therefore, the above transfer path can be blocked. Even in dangerous situations such as external fires, the intrusion of flame, heat, smoke and the like can be effectively resisted, and a good effect of blocking external noises can also be achieved, so as to provide a safer and more reliable internal environment of the elevator car for the passengers in the elevator car.

In addition, it should also be pointed out that in a normal state, the fire-proof seal 14 is in an initial non-intumescing state, such as shown in (a) portion of the partially enlarged view of part B in FIG. 3. However, due to the addition of such a fire-proof seal 14, as compared with the existing elevator cars, a certain sound insulation effect can still be achieved; in particular, airflow noises formed when the elevator moves up and down can be blocked, so that a quieter and more comfortable elevator-taking environment can be further created for the elevator passengers during the daily use of the elevator.

For the fire-proof seal 14, it can be made of any suitable fire-proof sealing material such as intumescent type graphite material, intumescent type glass fiber material, etc. Generally speaking, the fire-proof seal 14 can be optionally configured into a sheet shape, so that it can be arranged in the above gaps very conveniently and compactly. Of course, the present disclosure completely allows the fire-proof seal 14 to have any possible structural configuration, so as to be fully and flexibly adapted to various application requirements.

As an optional situation, the preset value of the corresponding temperature at which the fire-proof seal 14 intumesces and deforms may be selected and set in a range of 150°C-230°C, such as 160°C, 185°C, 190°C, 200°C or 220°C, etc. In addition, in an optional situation, the fire-proof seal 14 may be configured to have its volume increased by 10-20 times after intumescing and deforming, such as 12 times, 13 times, 15 times, or 18 times.

It should be understood that without departing from the scope of the appended claims, the present disclosure allows the required fire-proof seal 14 to be flexibly designed and provided according to actual application conditions. As an exemplary illustration, for example, in some embodiments, a flexible and intumescent type graphite sealing material may be used to make the fire-proof seal 14 and it may be configured into a shape of sealing strip, wherein the initial temperature at which it intumesces is approximately 190°C, and the volume is increased at least by 15 times after intumescing; that is, once the ambient temperature exceeds 190°C, the fire-proof seal 14 will intumesce at a volume increase factor of at least 15 times, so that the above gaps can be completely or partially filled, thereby effectively blocking flame, heat, noise and the like from entering the interior of elevator car through the above transfer path, and improving the safety of passengers while taking the elevator, etc.

With continued reference to FIGS. 2 and 3, in the given embodiment of elevator car, the fire-proof seal 14 is arranged in at least a part of the gap S 1 between the fast door 11 and the slow door 12 in actual application and in at least a part of the gap S2 between the slow door 12 and the jamb 10. In a specific arrangement, it is allowed to use any feasible connection method to arrange the fire-proof seal 14 in the gap S 1 or S2, such as clamping, bonding, magnetic connection, etc. As an example, the fire-proof seal 14 may be removably arranged in at least a part of the gap S 1 or S2. For example, the gap S 1 or S2 may be configured to be a labyrinth gap, and the fire-proof seal 14 may be adhered to two or more outer surfaces of the fast door 11 and/or the slow door 12, or adhered to two or more outer surfaces of the slow door 12 and/or the jamb 10, which is shown exemplarily in FIG. 3.

It should be noted that although the fire-proof seal 14 is collectively mentioned in the above, the shapes, configurations, materials used, arrangements and the like of the fire-proof seals 14 arranged at various specific positions are actually not limited in the present disclosure. Therefore, for the fire-proof seal 14 arranged in the gap S1, it may actually be the same as or different from the fire-proof seal 14 arranged in the gap S2. For example, the differences between these fire-proof seals 14 arranged at various positions may be embodied in one or more aspects such as materials selected, sizes (such as thickness, width or length, etc.), arrangement positions and so on.

In addition, it should also be noted that although the elevator car 100 having the fast door 11 and the slow door 12 is used as an example in the above description, the elevator car according to the present disclosure may for example include, but is not limited to, a centrally split door type elevator car, a double-folding side-opened elevator car, a three-folding side-opened elevator car, etc., that is, the solutions of the present disclosure actually allow the fire-proof seal 14 to be arranged in many types of elevator cars, which can bring for example the above-mentioned outstanding technical effects that are obviously superior to the prior art.

According to the technical solutions of the present disclosure, an elevator car door is also provided, which can be installed on an elevator car. The elevator car door has a gap communicating with the exterior of the elevator car when in a closed state, and the fire-proof seal as described above may be arranged on the elevator car door, so that the fire-proof seal intumesces and deforms to at least partially fill the gaps discussed above when the ambient temperature exceeds a preset value, thereby blocking the transfer path of flame, heat, smoke, and noise to the interior of the elevator car and providing a safer, more reliable and comfortable elevator-taking environment to elevator passengers.

Since the structures, configurations, working principles, effects, advantages and many other aspects of the elevator car door and the fire-proof seal have been described in detail when introducing the elevator car according to the present disclosure in the above, those skilled in the art can directly refer to the corresponding contents in the foregoing parts to understand and implement many embodiments of the elevator car door of the present disclosure, and a repeated description will be omitted herein.

In addition, according to another technical solution of the present disclosure, an elevator system is also provided, in which one or more elevator cars according to the present disclosure can be installed according to specific needs, so that the above transfer path (i.e., gap) of flame, heat, smoke, noise and the like that has not been paid attention to in the prior art can be effectively blocked in abnormal situations such as external fires and hazardous smoke. In this way, a safer, more reliable and comfortable elevator-taking environment can be provided to elevator passengers, while also contributing to further enhancing the safety performance and competitiveness of elevator products.

The elevator car, elevator car door and elevator system according to the present disclosure have been elaborated above in detail by way of example only. These examples are merely used to illustrate the principles and embodiments of the present invention, rather than limiting the present invention. Various modifications and improvements can be made by those skilled in the art without departing from the scope of the appended claims.

## Claims

1. An elevator car (100), comprising an elevator car door and a jamb (10), the elevator car door having a gap communicating with an exterior of the elevator car (100) when in a closed state, wherein the elevator car (100) further comprises a fire-proof seal (14) disposed on the elevator car door (100) and/or the jamb (10), and arranged to intumesce to at least partially fill the gap when the temperature of an environment in which the fire-proof seal (14) is located exceeds a preset value; wherein the elevator car door at least comprises a fast door (11) and a slow door (12), the gap comprises a first gap (S1) between the fast door (11) and the slow door (12) and a second gap (S2) between the slow door (12) and the jamb (10), and the fire-proof seal (14) comprises:
a first fire-proof seal arranged in at least a part of the first gap (S1); and
a second fire-proof seal arranged in at least a part of the second gap (S2) and configured to be the same as or different from the first fire-proof seal;
**characterized in that** the first gap (S1) and/or the second gap (S2) are configured to be a labyrinth gap, the first fire-proof seal (14) is adhered to at least two outer surfaces of the fast door (11) and/or the slow door (12), and the second fire-proof seal is adhered to at least two outer surfaces of the slow door (12) and/or the jamb (10).

2. The elevator car (100) according to claim 1, wherein the first fire-proof seal is arranged in a removable manner in at least a part of the first gap (S1), and the second fire-proof seal is arranged in a removable manner in at least a part of the second gap (S2).

3. The elevator car (100) according to claim 1 or 2, wherein the preset value is set in a range of 150°C-230°C.

4. The elevator car (100) according to any preceding claim, wherein a volume of the fire-proof seal (14) is increased by 10-20 times after intumescing.

5. The elevator car (100) according to any preceding claim, wherein the fire-proof seal (14) is made of a fire-proof sealing material and configured into a sheet shape, the fire-proof sealing material comprising an intumescent type graphite material.

6. An elevator car door, configured to be installed on an elevator car (100) and having a gap communicating with an exterior of the elevator car (100) when in a closed state, wherein a fire-proof seal (14) is disposed on the elevator car door and arranged to intumesce to at least partially fill the gap when the temperature of an environment in which the fire-proof seal (14) is located exceeds a preset value; wherein the elevator car door at least comprises a fast door (11) and a slow door (12), the gap comprises a first gap (S1) between the fast door (11) and the slow door (12) and a second gap (S2) between the slow door (12) and a jamb (10) of the elevator car (100), and the fire-proof seal (14) is arranged in at least a part of the first gap (S1);
**characterized in that** the first gap (S1) is configured to be a labyrinth gap, and the fire-proof seal is adhered to at least two outer surfaces of the fast door (11) and/or the slow door (12).

7. The elevator car door according to claim 6, wherein the fire-proof seal (14) is arranged in a removable manner in at least a part of the first gap (S1).

8. The elevator car door according to claim 6 or 7, wherein the preset value is set in a range of 150°C-230°C.

9. The elevator car door according to any of claims 6 to 8, wherein a volume of the fire-proof seal (14) is increased by 10-20 times after intumescing.

10. The elevator car door according to any of claims 6 to 9, wherein the fire-proof seal (14) is made of a fire-proof sealing material and configured into a sheet shape, the fire-proof sealing material comprising an intumescent type graphite material.

11. An elevator system, comprising at least one elevator car (100) according to any one of claims 1 to 5.

## Patentansprüche

1. Aufzugskabine (100), umfassend eine Aufzugskabinentür und einen Türpfosten (10), wobei die Aufzugskabinentür einen Spalt aufweist, der in einem geschlossenen Zustand mit einem Außenbereich der Aufzugskabine (100) in Verbindung steht, wobei die Aufzugskabine (100) ferner eine feuerfeste Dichtung (14) umfasst, die an der Aufzugskabinentür (100) und/oder dem Türpfosten (10) angeordnet und eingerichtet ist, um anzuschwellen, um den Spalt mindestens teilweise zu füllen, wenn die Temperatur einer Umgebung, in der sich die feuerfeste Dichtung (14) befindet, einen voreingestellten Wert überschreitet; wobei die Aufzugskabinentür mindestens eine schnelle Tür (11) und eine langsame Tür (12) umfasst, der Spalt einen ersten Spalt (S1) zwischen der schnellen Tür (11) und der langsamen Tür (12) und einen zweiten Spalt (S2) zwischen der langsamen Tür (12) und dem Türpfosten (10) umfasst, und die feuerfeste Dichtung (14) Folgendes umfasst:
eine erste feuerfeste Dichtung, die in mindestens einem Teil des ersten Spalts (S1) angeordnet ist; und
eine zweite feuerfeste Dichtung, die in mindestens einem Teil des zweiten Spalts (S2) angeordnet und konfiguriert ist, um mit der ersten feuerfesten Dichtung identisch zu sein oder sich von ihr zu unterscheiden;
**dadurch gekennzeichnet, dass** der erste Spalt (S1) und/oder der zweite Spalt (S2) als Labyrinthspalt konfiguriert sind, die erste feuerfeste Dichtung (14) an mindestens zwei Außenflächen der schnellen Tür (11) und/oder der langsamen Tür (12) aufgeklebt ist, und die zweite feuerfeste Dichtung an mindestens zwei Außenflächen der langsamen Tür (12) und/oder des Türpfostens (10) aufgeklebt ist.

2. Aufzugskabine (100) nach Anspruch 1, wobei die erste feuerfeste Dichtung in mindestens einem Teil des ersten Spalts (S1) abnehmbar angeordnet ist und die zweite feuerfeste Dichtung in mindestens einem Teil des zweiten Spalts (S2) abnehmbar angeordnet ist.

3. Aufzugskabine (100) nach Anspruch 1 oder 2, wobei der voreingestellte Wert in einem Bereich von 150°C-230°C liegt.

4. Aufzugskabine (100) nach einem der vorhergehenden Ansprüche, wobei ein Volumen der feuerfesten Dichtung (14) nach dem Anschwellen um das 10-20-fache erhöht wird.

5. Aufzugskabine (100) nach einem der vorhergehenden Ansprüche, wobei die feuerfeste Dichtung (14) aus einem feuerfesten Dichtungsmaterial hergestellt und in eine Plattenform konfiguriert ist, wobei das feuerfeste Dichtungsmaterial ein anschwellendes Graphitmaterial umfasst.

6. Aufzugskabinentür, die konfiguriert ist, um an einer Aufzugskabine (100) installiert zu werden und einen Spalt aufweist, der in einem geschlossenen Zustand mit einem Außenbereich der Aufzugskabine (100) in Verbindung steht, wobei eine feuerfeste Dichtung (14) an der Aufzugskabinentür angeordnet und eingerichtet ist, um anzuschwellen, um den Spalt mindestens teilweise zu füllen, wenn die Temperatur einer Umgebung, in der sich die feuerfeste Dichtung (14) befindet, einen voreingestellten Wert überschreitet; wobei die Aufzugskabinentür mindestens eine schnelle Tür (11) und eine langsame Tür (12) umfasst, der Spalt einen ersten Spalt (S1) zwischen der schnellen Tür (11) und der langsamen Tür (12) und einen zweiten Spalt (S2) zwischen der langsamen Tür (12) und einem Türpfosten (10) der Aufzugskabine (100) umfasst, und die feuerfeste Dichtung (14) in mindestens einem Teil des ersten Spalts (S1) angeordnet ist;
**dadurch gekennzeichnet, dass** der erste Spalt (S1) als Labyrinthspalt konfiguriert ist und die feuerfeste Dichtung an mindestens zwei Außenflächen der schnellen Tür (11) und/oder der langsamen Tür (12) aufgeklebt ist.

7. Aufzugskabinentür nach Anspruch 6, wobei die feuerfeste Dichtung (14) mindestens in einem Teil des ersten Spaltes (S1) herausnehmbar angeordnet ist.

8. Aufzugskabinentür nach Anspruch 6 oder 7, wobei der voreingestellte Wert in einem Bereich von 150°C-230°C liegt.

9. Aufzugskabinentür nach einem der Ansprüche 6 bis 8, wobei ein Volumen der feuerfesten Dichtung (14) nach dem Anschwellen um das 10-20-fache erhöht wird.

10. Aufzugskabinentür nach einem der Ansprüche 6 bis 9, wobei die feuerfeste Dichtung (14) aus einem feuerfesten Dichtungsmaterial hergestellt und in eine Plattenform konfiguriert ist, wobei das feuerfeste Dichtungsmaterial ein anschwellendes Graphitmaterial umfasst.

11. Aufzugssystem, das mindestens eine Aufzugskabine (100) nach einem der Ansprüche 1 bis 5 umfasst.

## Revendications

1. Cabine d'ascenseur (100), comprenant une porte de cabine d'ascenseur et un montant (10), la porte de cabine d'ascenseur ayant un espace communiquant avec un extérieur de la cabine d'ascenseur (100) lorsqu'elle est dans un état fermé, dans laquelle la cabine d'ascenseur (100) comprend également un joint ignifuge (14) disposé sur la porte de cabine d'ascenseur (100) et/ou le montant (10), et agencé pour être intumescent afin de remplir au moins partiellement l'espace lorsque la température d'un environnement dans lequel le joint ignifuge (14) est situé dépasse une valeur préréglée ; dans laquelle la porte de cabine d'ascenseur comprend au moins une porte rapide (11) et une porte lente (12), l'espace comprend un premier espace (S1) entre la porte rapide (11) et la porte lente (12) et un second espace (S2) entre la porte lente (12) et le montant (10), et le joint ignifuge (14) comprend :
un premier joint ignifuge agencé dans au moins une partie du premier espace (S1) ; et
un second joint ignifuge agencé dans au moins une partie du second espace (S2) et configuré pour être identique ou différent du premier joint ignifuge ;
**caractérisée en ce que** le premier espace (S1) et/ou le second espace (S2) sont configurés comme un espace labyrinthe, le premier joint ignifuge (14) est collé sur au moins deux surfaces extérieures de la porte rapide (11) et/ou de la porte lente (12), et le second joint ignifuge est collé à au moins deux surfaces extérieures de la porte lente (12) et/ou du montant (10) .

2. Cabine d'ascenseur (100) selon la revendication 1, dans laquelle le premier joint ignifuge est agencé de manière amovible dans au moins une partie du premier espace (S1), et le second joint ignifuge est agencé de manière amovible dans au moins une partie du second espace (S2).

3. Cabine d'ascenseur (100) selon la revendication 1 ou 2, dans laquelle la valeur préréglée est réglée dans une plage de 150 °C à 230 °C.

4. Cabine d'ascenseur (100) selon une quelconque revendication précédente, dans laquelle le volume du joint ignifuge (14) est augmenté de 10 à 20 fois après intumescence.

5. Cabine d'ascenseur (100) selon une quelconque revendication précédente, dans laquelle le joint ignifuge (14) est constitué d'un matériau d'étanchéité ignifuge et configuré en forme de feuille, le matériau d'étanchéité ignifuge comprenant un matériau de graphite de type intumescent.

6. Porte de cabine d'ascenseur, configurée pour être installée sur une cabine d'ascenseur (100) et ayant un espace communiquant avec un extérieur de la cabine d'ascenseur (100) lorsqu'elle est dans un état fermé, dans laquelle un joint ignifuge (14) est disposé sur la porte de cabine d'ascenseur et agencé pour être intumescent afin de remplir au moins partiellement l'espace lorsque la température d'un environnement dans lequel le joint ignifuge (14) est situé dépasse une valeur préréglée ; dans laquelle la porte de cabine d'ascenseur comprend au moins une porte rapide (11) et une porte lente (12), l'espace comprend un premier espace (S1) entre la porte rapide (11) et la porte lente (12) et un second espace (S2) entre la porte lente (12) et un montant (10) de la cabine d'ascenseur (100), et le joint ignifuge (14) est agencé dans au moins une partie du premier espace (S1) ; **caractérisée en ce que** le premier espace (S1) est configuré pour être un espace labyrinthe, et le joint ignifuge est collé à au moins deux surfaces extérieures de la porte rapide (11) et/ou de la porte lente (12).

7. Porte de cabine d'ascenseur selon la revendication 6, dans laquelle le joint ignifuge (14) est agencé de manière amovible dans au moins une partie du premier espace (S1).

8. Porte de cabine d'ascenseur selon la revendication 6 ou 7, dans laquelle la valeur préréglée est réglée dans une plage de 150 °C à 230 °C.

9. Porte de cabine d'ascenseur selon l'une quelconque des revendications 6 à 8, dans laquelle le volume du joint ignifuge (14) est augmenté de 10 à 20 fois après intumescence.

10. Porte de cabine d'ascenseur selon l'une quelconque des revendications 6 à 9, dans laquelle le joint ignifuge (14) est constitué d'un matériau d'étanchéité ignifuge et configuré en forme de feuille, le matériau d'étanchéité ignifuge comprenant un matériau de graphite de type intumescent.

11. Système d'ascenseur, comprenant au moins une cabine d'ascenseur (100) selon l'une quelconque des revendications 1 à 5.
